# EUROPEAN PATENT APPLICATION

(11) **EP 4 213 047 A1**
(43) Date of publication of application: **19.07.2023**
(21) Application number: 21866121.3
(22) Date of filing: 14.09.2021
(51) Int. Cl.: G06F 21/36

(54) **ACCOUNT BINDING METHOD AND APPARATUS, TERMINAL, AND STORAGE MEDIUM**

(30) Priority: 14.09.2020 CN 202010960187
(71) Applicant: GUANGDONG OPPO MOBILE TELECOMMUNICATIONS CORP., LTD., Dongguan, Guangdong 523860 (CN)
(72) Inventor: ZENG, Chunliang, Dongguan, Guangdong 523860 (CN); ZHAI, Zhaoxuan, Dongguan, Guangdong 523860 (CN); HUANG, Xiangwen, Dongguan, Guangdong 523860 (CN); YANG, Qichang, Dongguan, Guangdong 523860 (CN); YU, Zhenrong, Dongguan, Guangdong 523860 (CN); YU, Zhigang, Dongguan, Guangdong 523860 (CN); WU, Taiyue, Dongguan, Guangdong 523860 (CN); FENG, Tao, Dongguan, Guangdong 523860 (CN)
(74) Representative: Taor, Simon Edward William
(86) International application number: PCT/CN2021/118359
(87) International publication number: WO 2022/053069

(57) **Abstract**

An account binding method and apparatus, a terminal, and a storage medium are provided, relating to the field of computer technology. The method includes the following. When a control device requests to obtain a first string, a server can maintain a mapping relationship between a master account and the first string in the server, and send the first string to the control device. The control device can generate a corresponding graphic code according to the first string. A smart device captures the graphic code and parses the graphic code to obtain a second string, and then sends the second string to the server. The server verifies, according to the mapping relationship, validity of establishing a binding relationship between the smart device and the master account. Since the smart device can safely bind with the master account in the server after scanning the graphic code, the operation of binding the smart device with the master account can be simplified and leakage of the master account can be avoided.

## Description

### CROSS-REFERENCE TO RELATED APPLICATION(S)

The disclosure claims priority to Chinese Patent Application No. 202010960187.5, filed September 14, 2020, and entitled "ACCOUNT BINDING METHOD AND APPARATUS, TERMINAL, AND STORAGE MEDIUM", the entire disclosure of which is hereby incorporated by reference.

### TECHNICAL FIELD

This disclosure relates to the field of computer technology, in particular to an account binding method and apparatus, a terminal, and a storage medium.

### BACKGROUND

With the wide application of smart devices in life, the smart device with a shooting function is also increasingly popular. In some scenarios, the smart device needs to be bound with a master account of a user, to be controlled by the master account.

In the related art, the smart device with the shooting function generally needs to establish a communication connection with a control device, and then sends the master account to a server and binds with the master account. Network access information is manually input by the user through the control device, to instruct the smart device to access the Internet according to the network access information. Then, the smart device sends an identifier thereof and the master account to the server, and the master account and the smart device are bound in the server.

### SUMMARY

Implementations of the disclosure provide an account binding method and apparatus, a terminal, and a storage medium. The technical solution is as follows.

According to an aspect of the disclosure, an account binding method is provided. The method is performed by a server and includes the following.

A request message is received from a control device, where the request message is for requesting a first string. The first string is generated according to a preset rule, where the first string and a master account logged in the control device have a mapping relationship. The first string is sent to the control device, where the first string is transferred by the control device to a smart device in a preset manner, and the first string is for the server to verify, according to the mapping relationship, validity of establishing a binding relationship between the smart device and the master account.

According to an aspect of the disclosure, an account binding method is provided. The account binding method is performed by a control device and includes the following.

A request message is sent to a server, where the request message is for requesting a first string. The first string is received from the server, where the first string and a master account logged in the control device have a mapping relationship. A target graphic code is generated according to the first string. The target graphic code is displayed, where the target graphic code is to be scanned and parsed by the smart device to obtain a second string, and the second string is for the server to verify, according to the mapping relationship, validity of establishing a binding relationship between the smart device and the master account.

According to an aspect of the disclosure, an account binding method is provided. The account binding method is performed by a smart device having an image acquisition assembly and includes the following.

A target graphic code displayed on a control device is scanned, where the target graphic code includes a first string, and the first string and a master account logged in the control device have a mapping relationship. The target graphic code is parsed to obtain a second string. The second string is sent to a server, where the second string is for the server to verify, according to the mapping relationship, validity of establishing a binding relationship between the smart device and the master account.

According to an aspect of the disclosure, an account binding apparatus is provided. The account binding apparatus is performed by a server and includes a first receiving module, a string obtaining module, and a first sending module.

The first receiving module is configured to receive a request message from a control device, where the request message is for requesting a first string. The string obtaining module is configured to generate the first string according to a preset rule, where the first string and a master account logged in the control device have a mapping relationship. The first sending module is configured to send the first string to the control device, where the first string is transferred by the control device to a smart device in a preset manner, and the first string is for the server to verify, according to the mapping relationship, validity of establishing a binding relationship between the smart device and the master account.

According to an aspect of the disclosure, an account binding apparatus is provided. The account binding apparatus is performed by a control device and includes a second sending module, a second receiving module, a graphic code generating module, and a graphic code displaying module.

The second sending module is configured to send a request message to a server, where the request message is for requesting a first string. The second receiving module is configured to receive the first string from the server, where the first string and a master account logged in the control device have a mapping relationship. The graphic code generating module is configured to generate a target graphic code according to the first string. The graphic code displaying module configured to display the target graphic code, where the target graphic code is to be scanned and parsed by the smart device to obtain a second string, and the second string is for the server to verify, according to the mapping relationship, validity of establishing a binding relationship between the smart device and the master account.

According to an aspect of the disclosure, an account binding apparatus is provided. The account binding apparatus is performed by a smart device having an image acquisition assembly and includes a code scanning module, a parsing module, and a third sending module.

The code scanning module is configured to scan a target graphic code displayed on a control device, where the target graphic code includes a first string, and the first string and a master account logged in the control device have a mapping relationship. The parsing module is configured to parse the target graphic code to obtain a second string. The third sending module is configured to send the second string to a server, where the second string is for the server to verify, according to the mapping relationship, validity of establishing a binding relationship between the smart device and the master account.

According to an aspect of the disclosure, a server is provided. The server includes and a memory storing program instructions and a processor coupled with the memory and configured to execute the program instructions to implement the account binding method of each aspect of the disclosure.

According to an aspect of the disclosure, a control device is provided. The control device includes a memory storing program instructions and a processor coupled with the memory and configured to execute the program instructions to implement the account binding method of each aspect of the disclosure.

According to an aspect of the disclosure, a smart device is provided. The smart device includes a memory storing program instructions and a processor coupled with the memory and configured to execute the program instructions to implement the account binding method of each aspect of the disclosure.

According to an aspect of the disclosure, a computer-readable storage medium is provided. The computer-readable storage medium stores program instructions, which when executed by a processor, cause the processor to execute the account binding method of each aspect provided by a server in the disclosure.

According to an aspect of the disclosure, a computer-readable storage medium is provided. The computer-readable storage medium stores program instructions, which when executed by a processor, cause the processor to execute the account binding method of each aspect provided by a control device in the disclosure.

According to an aspect of the disclosure, a computer-readable storage medium is provided. The computer-readable storage medium stores program instructions, which when executed by a processor, cause the processor to execute the account binding method of each aspect provided by a smart device in the disclosure.

According to an aspect of the disclosure, a computer program product is provided. computer program product includes computer instructions stored in a computer readable storage medium. A processor of a server reads the computer instructions from the computer readable storage medium. The processor executes the computer instructions to cause a computer device to execute the above account binding method provided in various optional implementations performed by the server.

According to an aspect of the disclosure, a computer program product is provided. computer program product includes computer instructions stored in a computer readable storage medium. A processor of a control device reads the computer instructions from the computer readable storage medium. The processor executes the computer instructions to cause a computer device to execute the above account binding method provided in various optional implementations performed by the control device.

According to an aspect of the disclosure, a computer program product is provided. computer program product includes computer instructions stored in a computer readable storage medium. A processor of a smart device reads the computer instructions from the computer readable storage medium. The processor executes the computer instructions to cause a computer device to execute the above account binding method provided in various optional implementations performed by the smart device.

### BRIEF DESCRIPTION OF THE DRAWINGS

To describe technical solutions in implementations of the disclosure more clearly, the following briefly introduces the accompanying drawings required in describing the implementations. Apparently, the accompanying drawings in the following description illustrate some implementations of the present disclosure. Those of ordinary skill in the art may also obtain other drawings based on these accompanying drawings without creative efforts.
FIG. 1 is a schematic diagram of an implementation environment of an account binding method provided in implementations of the disclosure.
FIG. 2 is a block diagram of a structure of a control device provided in an exemplary implementation of the disclosure.
FIG. 3 is a block diagram of a structure of a smart device provided in an exemplary implementation of the disclosure.
FIG. 4 is a block diagram of a structure of a server provided in an exemplary implementation of the disclosure.
FIG. 5 is a flowchart of an account binding method provided in an exemplary implementation of the disclosure.
FIG. 6 is a flowchart of an account binding method provided in an exemplary implementation of the disclosure.
FIG. 7 is a flowchart of an account binding method provided in an exemplary implementation of the disclosure.
FIG. 8 is a flowchart of an account binding method provided in another exemplary implementation of the disclosure.
FIG. 9 is a block diagram of a structure of an account binding apparatus provided in an exemplary implementation of the disclosure.
FIG. 10 is a block diagram of a structure of an account binding apparatus provided in an exemplary implementation of the disclosure.
FIG. 11 is a block diagram of a structure of an account binding apparatus provided in an exemplary implementation of the disclosure.

### DETAILED DESCRIPTION

To make objectives, technical solutions, and advantages of the disclosure clearer, implementations of the disclosure will be described in further detail below with reference to accompanying drawings.

In describing the accompanying drawings, unless otherwise indicated, the same numbers in different accompanying drawings represent the same or similar elements. The implementations described in the following exemplary implementations do not represent all implementations consistent with the disclosure. Rather, they are merely examples of apparatuses and methods consistent with some aspects of the disclosure, as detailed in the appended claims.

In addition, terms "first", "second", and the like are only used for description and cannot be understood as explicitly or implicitly indicating relative importance. In the description of the disclosure, it is noted that, unless stated otherwise, terms "coupling" and "connecting", should be understood in broader sense. For example, the coupling may be a fixed coupling, a removable coupling, or an integrated coupling, may be a mechanical coupling, or an electrical coupling, or may be a direct coupling, or an indirect coupling through a medium. For those of ordinary skill in the art, the meaning of the above terms in the present disclosure can be understood according to specific situations. It should be understood that, "multiple" mentioned herein refers to two or more. "And/or" describes the relationship between associated objects, indicating that there can be three relationships. For example, "A and/or B" means: "A" exists alone, "A" and "B" exist at the same time, and "B" exists alone. The character "j" generally indicates that the relationship between associated objects is "or".

An account binding method is provided in the disclosure. The method is performed by a server and includes the following.

A request message is received from a control device, where the request message is for requesting a first string. The first string is generated according to a preset rule, where the first string and a master account logged in the control device have a mapping relationship. The first string is sent to the control device, where the first string is transferred by the control device to a smart device in a preset manner, and the first string is for the server to verify, according to the mapping relationship, validity of establishing a binding relationship between the smart device and the master account.

Optionally, the method further includes the following. A second string is received from the smart device. The binding relationship is established between the smart device and the master account in response to the second string matching the first string.

Optionally, after generating the first string according to the preset rule, the method further includes the following. A timer is set. The mapping relationship between the master account and the first string is released in response to expiry of the timer.

Optionally, the first string is generated according to the preset rule as follows. A first sequence is generated according to a random-number generation function, where the first sequence is a random sequence. The first string is determined according to the first sequence.

Optionally, the first string is determined according to the first sequence as follows. An initial character in the first sequence is obtained. A result *m* is obtained by performing a modulo operation on the initial character by *n,* where *n and m* are positive integers. The first string is obtained by adding *m* to the end of the first sequence. Alternatively, the initial character in the first sequence is obtained. The result *m* is obtained by performing the modulo operation on the initial character by *n,* where *n and m* are positive integers. The first string is obtained by adding same preset characters *of m* bits to the end of the first sequence. Alternatively, the initial character in the first sequence is obtained. The result *m* is obtained by performing the modulo operation on the initial character by *n,* where *n and m* are positive integers. A check code *k* corresponding to *m* is determined according to a preset mapping relationship, where k is a character or a string. The first string is obtained by adding k to the end of the first sequence. Alternatively, the first sequence is determined as the first string.

Optionally, the first string is generated according to the preset rule as follows. A second sequence is selected from a preset sequence library, where the second sequence is determined according to a random selection rule. The second sequence is determined as the first string.

Optionally, after establishing the binding relationship between the smart device and the master account, the method further includes the following. A domain corresponding to the master account is obtained and the smart device is added to the domain.

Optionally, the master account corresponds to at least two domains and the domain corresponding to the master account is obtained as follows. A geographic position where the control device sends the request message is obtained. A domain corresponding to the geographic position is determined from the at least two domains.

An account binding method is further provided in the disclosure. The account binding method is performed by a control device and includes the following. A request message is sent to a server, where the request message is for requesting a first string. The first string is received from the server, where the first string and a master account logged in the control device have a mapping relationship. A target graphic code is generated according to the first string. The target graphic code is displayed, where the target graphic code is to be scanned and parsed by the smart device to obtain a second string, and the second string is for the server to verify, according to the mapping relationship, validity of establishing a binding relationship between the smart device and the master account.

Optionally, the target graphic code is generated according to the first string as follows. Network access information is obtained, where the network access information is for accessing a designated wireless router. The first string and the network access information are encoded according to a preset encoding rule, and the target graphic code is generated.

Optionally, the target graphic code is generated as follows. The first string and the network access information that are encoded according to the preset encoding rule is generated as the target graphic code, according to an encoding rule of representing binary data based on 64 printable characters.

An account binding method is further provided in the disclosure. The account binding method is performed by a smart device having an image acquisition assembly and includes the following. A target graphic code displayed on a control device is scanned, where the target graphic code includes a first string, and the first string and a master account logged in the control device have a mapping relationship. The target graphic code is parsed to obtain a second string. The second string is sent to a server, where the second string is for the server to verify, according to the mapping relationship, validity of establishing a binding relationship between the smart device and the master account.

Optionally, the target graphic code includes network access information, and the network access information is for accessing a designated wireless router. Before sending the second string to the server, the method further includes the following. The target graphic code is parsed to obtain the network access information. The wireless router is accessed according to the network access information.

The technical solutions provided in implementations of the disclosure can bring the following advantageous effect.

In implementations of the disclosure, when the control device requests to obtain the first string, the server can maintain the mapping relationship between the master account and the first string in the server, and send the first string to the control device. The control device can generate the corresponding graphic code according to the first string. The smart device shoots the graphic code and parses the graphic code to obtain the second string, and then sends the second string to the server. The server verifies, according to the mapping relationship, the validity of establishing the binding relationship between the smart device and the master account. Since the smart device can safely bind with the master account in the server after scanning the graphic code, the operation of binding the smart device with the master account can be simplified and leakage of the master account can be avoided.

To facilitate understanding of solutions illustrated in implementations of the disclosure, several terms present in implementations of the disclosure are introduced below.

First string: a string obtained in a cloud server according to a preset rule.

In a possible implementation, the first string is contents generated by the server according to the preset rule. This string does not exist in the server originally, instead, the first string is generated by the server according to the preset rule after receiving a request message sent by a control device.

In another possible implementation, the first string is an existing string in a preset sequence library in the server. After the control device sends the request message to the server, the server can obtain the first string according to the preset rule. In implementations of the disclosure, the first string may be a BindKey (Bind Key), and BindKey may be a string used for binding verification between the smart device and a master account in the cloud server.

Second string: a string generated in the smart device. The smart device can parse a graphic code. The smart device parses the encoded first string in the graphic code, to obtain the second string. This string can be sent to the server by the smart device, so that the server determines whether the first string is the same as the second string by comparing the second string and the first string. When the first string is the same as the second string, the server binds the smart device and the master account, to achieve quickly binding between the smart device and the master account.

Master account: an account currently logged into the control device. It should be noted that, the master account may be a mobile phone number, an email address, a nickname, a name, a room number, or the like. As can be seen, the master account contains privacy information about the user to some extent, which may affect the privacy of the user if leaked. Therefore, according to implementations of the disclosure, in the process of networking of the smart device, the master account is not transmitted between the control terminal and the smart device or between the smart device and the server, thereby improving the security of the master account and avoiding leakage of privacy information of the user in transmission.

Preset encoding rule: a rule for encoding the first string and the network access information into a string of a specified form. In a possible implementation, the preset encoding rule may be an encoding rule based on base 62.

Exemplarily, the first string obtained according to the above preset encoding rule is a field, and the field is included in a target string. The target string may contain several fields, and two fields are separated by a space, where each field contains a keyword and field content. The keyword represents the function of the field. In a possible implementation, the keyword is a capital letter. In other possible implementations, the keyword can also be a combination of a specified character and a capital letter.

For example, the target string can be W: D<Timestamp> R<Region> B<BindKey> S<SSID> P<PASSPHASE>.

In the above first string, W is a start identifier, so that the control device identifies D<Timestamp> R<Region> B<BindKey> S<SSID> P<PASSPHASE> as the first string.

The field D<Timestamp> is a timestamp, indicating the current date, and the encoding rule thereof is hexadecimal.

The field B<BindKey> is a field where the first string locates, with the maximum length less than 32 bytes, where BindKey is included in the first string.

The field S<SSID> is a field for indicating an SSID of WiFi, with the maximum length less than 31 bytes.

The field R<Region> is used to indicate domain name prefix of IoT server, and the field content may be composed of capital letters.

The field P<PASSPHASE> is used to indicate the password of WiFi, with a value ranging from 8 bytes to 63 bytes.

Optionally, in the above fields, the field R<Region> can be omitted if the server is unique. Alternatively, the field R<Region> can be omitted if the server is default. The field P<PASSPHASE> may be omitted if the WiFi is password-free.

It should be noted that, in the target string, an order of arrangement of various fields may be set. The order may be any order.

After the control device sets the order of arrangement of the fields, the control device can escape the field content in each field. In one possible escape process, for the two-dimensional code field content from which the target graphic code is generated, the escape character "" is used to escape the field that may be confused, and this character belongs to the coding format of ASCII 92. The character that needs to be escaped contains the space (SPACE, ASCII 32) and the escape character itself (ASCII 92). The manner of escape is illustrated by way of example below.

For example, the actual content of the field is "AB zhongwen CD PNF", and is "AB zhongwen C\\D\ PNF" after escape. In this example, during parsing, when the control device reads "", it needs to determine whether the next character in "" is the space (SPACE) or the escape character itself. If the next character in "" is the space (SPACE) or the escape character itself, they will be merged into one character, otherwise they will remain two characters. For example, if the content after escape is A\B zhong\wen C\\D\ PNF, the content should be parsed into A\B zhong\wen C\D PNF.

In detail, the timestamp represented by the field D<Timestamp> may be a UTC day-level timestamp, represented in hexadecimal. For example, time 2020-05-28T14:11:44Z should be encoded as 47EA.

The field S<SSID> indicates an SSID of WiFi, with the length no more than 31 bytes, and is encoded with UTF-8 character set. Exemplarily, if a special character in the field S<SSID> needs to be escaped, its length may exceed 31 bytes after escape.

The field P<PASSPHASE> represents the obfuscated WiFi connection password, which may be omitted in a specified scenario, indicating that there is no WiFi connection password at this time. The WiFi connection password may be 8 to 63 ASCII code characters. In this implementation, the method for obfuscating the WiFi connection password may be an exclusive OR operation with SSID. When the length of SSID is insufficient, SSID will be cyclically written, resulting in the field P<PASSPHASE>.

The field R<Region> is a region identifier, and may become a URL after being complemented, for example, a preset complement postfix is ".iot.abcabcabcd.com". That is, if Region is CN, after CN is complemented with the postfix, the complete domain name is "CN.iot.abcabcabcd.com".

The field<BindKey> represents a token in the process of binding the smart device and the master account, and is composed of 32 upper and lower case letters and numerical characters. In one possible implementation, the valid duration of BindKey is 10 minutes.

In a possible scenario, the target field may be W: D47EA RCN B1234567890abcdefghijklmnopqrstuv SSSID. The meaning of the target field is that: the system time is May 28, 2020, 00:00:00UTC; attempt to connect to an unlicensed wireless router of which an SSID is an SSID; the server to which the smart device is connected is located in CN; BindKey used by the smart device is 1234567890abcdefghijklmnopqrstuv.

For another example, in the implementation of the disclosure, the control terminal may also use the current system time as original encoding information to jointly generate the graphic code. For example, if the current system time of the control terminal is August 21, 2020, 15:24:36, 20200821152436 may be used as one piece of information for generating the graphic code.

Graphic code: including a bar code, a two-dimensional code, and other graphs containing encoding information. In one possible implementation, the two-dimensional code may be a quick response code (QR-code).

Network access information: including information for accessing the wireless router.

In a possible scenario, when the wireless router is an open gateway that can be accessed without a password, the network access information may include only an identifier of the wireless router. In a possible implementation, the identifier of the wireless router is a service set identifier (SSID).

In another possible scenario, when the wireless router can be accessed with a key, the network access information may include the identifier of the wireless router and the key. The key may be a phase-shift keying (PSK).

DHCP (dynamic host configuration protocol).

IP (Internet protocol) address.

In implementations of the disclosure, the method can be performed by a system including a server, a control device, and a smart device. Therefore, before introducing an account binding method provided in the disclosure, a possible implementation environment of the disclosure is introduced first.

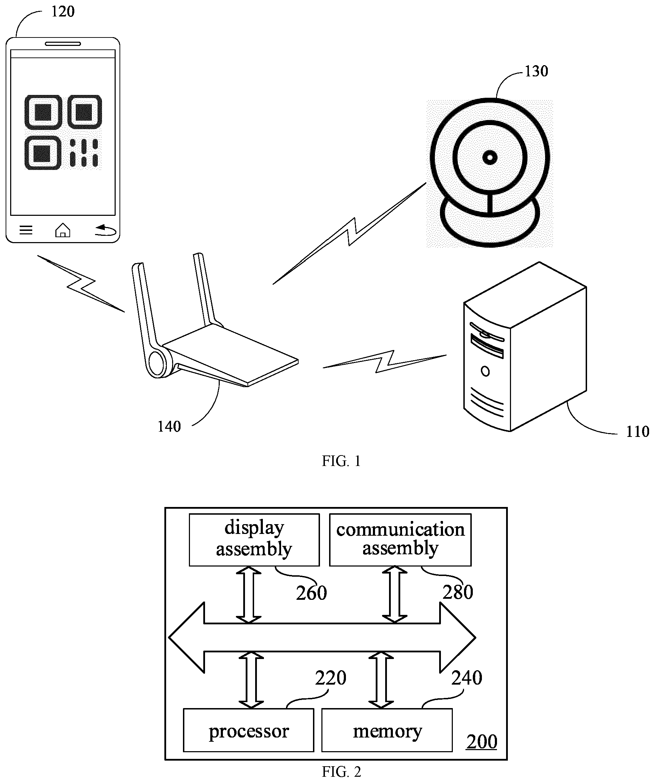

Referring to FIG. 1, FIG. 1 is a schematic diagram of an implementation environment of an account binding method provided in implementations of the disclosure. In FIG. 1, a server 110, a control terminal 120, and an image acquisition terminal 130 are included.

The server 110 may be a server set in the cloud, or the server 110 may also be a server cluster composed of multiple servers set in the cloud. When the server 110 is a server cluster composed of multiple servers, the multiple servers are in a distributed architecture.

When the server 110 is a server cluster composed of multiple servers, the server 110 may implement various functions thereof through different servers. For example, the server cluster includes a storage server, a core server, and a scheduling server.

In another possible implementation, the server 110 is a virtual server disposed in a physical network device. In the physical network device, services may be provided for multiple virtual servers according to resource requirements and time requirements.

The practical implementation of the server 110 is not limited in implementations of the disclosure.

The control terminal 120 can assess the Internet and connect to the smart device 130 illustrated in the disclosure. It should be noted that, because the control device needs to be connected with the smart device, the control device and the smart device need to support the same communication protocol. When the communication protocol is a preset password authentication protocol, both the control device and the smart device have a preset authentication password.

In a possible implementation, the control terminal 120 may be a mobile phone, a tablet computer, a notebook computer, or a wearable smart device.

The smart device 130 may be a device having an image acquisition assembly. Exemplarily, an image acquisition assembly may be a camera, an optical sensor, or other sensor capable of acquiring appearance information of an image.

In the implementation environment illustrated in the disclosure, a wireless router 140 may also be included.

Before the smart device 130 is connected to the Internet, the solution provided in the disclosure needs to be executed. After the network configuration of the smart device 130 is completed, a communication connection is established between the smart device 130 and the wireless router 140. The control device 120 may not establish a communication connection with the smart device 130. The wireless router 140 establishes a communication connection with the server 110 through a network cable. The control device 120 establishes a communication connection with the server 110 through a mobile Internet or the wireless router 140.

It should be noted that, the wireless router 140 may serve as a gateway device in a current home to control each device in the home.

In one possible implementation, the smart device in the home further includes a smart TV, a smart air conditioner, a smart refrigerator, a smart washing machine, a smart water heater, a smart water dispenser, a smart rice cooker, a smart oven, a smart microwave oven, a smart dishwasher, a smart water purifier, a smart air purifier, a smart robot cleaner, a smart clothes dryer, a smart clothes dryer, a smart projector, a smart lamp, a smart window lock, a smart doorbell, a smart cat eye, a smart door lock, and a smart camera. It should be noted that the foregoing smart device is only for illustration, and does not limit the smart device illustrated in the disclosure. Alternatively, the smart device may be the foregoing device including the image acquisition assembly. That is, if the smart device includes the image acquisition assembly, for example, a camera, the smart device may be regarded as the smart device 130 illustrated in the disclosure.

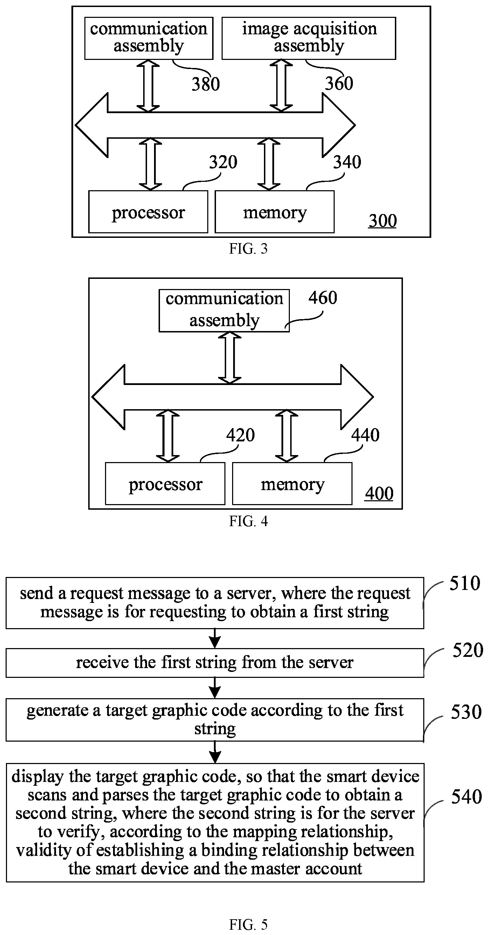

In the disclosure, the control device, the server, and the smart device may be introduced separately as follows. In FIG. 2, a possible hardware structure of the control device is introduced. In FIG. 3, a possible hardware structure of the server is introduced, and in FIG. 4, a hardware structure of the smart device is introduced.

Referring to FIG. 2, FIG. 2 is a block diagram of a structure of a control device provided in an exemplary implementation of the disclosure. As illustrated in FIG. 2, the control device includes a processor 220, a memory 240, a display assembly 260, and a communication assembly 280. The memory 240 stores at least one instruction, and the instruction is loaded and executed by the processor 220 to implement the account binding method of each method implementation of the disclosure.

In the disclosure, the control device 200 sends a request message to a server, where the request message is for requesting a first string; the control device 200 receives the first string sent by the server, where the first string and a master account logged in the control device have a mapping relationship; the control device 200 generates a target graphic code according to the first string; and the control device 200 displays the target graphic code, so that a smart device scans and parses the target graphic code to obtain a second string, where the second string is for the server to verify, according to the mapping relationship, validity of the binding relationship between the smart device and the master account.

The processor 220 may include one or more processing cores. The processor 220 is configured to connect to various parts in the whole control device 200 by using various interfaces and lines, and executes various functions of the control device 200 and processes data by running or executing an instruction, a program, a code set, or an instruction set stored in the memory 240 and invoking data stored in the memory 240. Optionally, the processor 220 may be implemented in at least one hardware form of digital signal processing (DSP), a field programmable gate array (FPGA), or a programmable logic array (PLA). The processor 220 may integrate one or a combination of a central processing unit (CPU), a graphics processing unit (GPU), a modem, and the like. The CPU is mainly used to process an operating system, a user interface, an application program, and the like. The GPU is for rendering and drawing contents required to be displayed on a display screen. The modem is used to process wireless communication. It may be understood that the modem may also not be integrated into the processor 220 and may be implemented by using one chip separately.

The memory 240 may include a random access memory (RAM), and may also include a read-only memory (ROM). Alternatively, the memory 240 may include a non-transitory computer readable storage medium. The memory 240 may be used to store instructions, programs, code, code sets, or instruction sets. The memory 240 may include a program storage area and a data storage area, where the program storage area may store an instruction for implementing the operating system, an instruction for at least one function (such as a touch control function, a voice playing function, and an image playing function), an instruction for implementing each of the following method implementations, etc. The data storage area may store data involved in the following method implementations.

The display assembly 260 is configured to display the target graphic code. In the disclosure, the display assembly 260 may be a display screen, a projection assembly, or other assembly capable of displaying an image.

The communication assembly 280 is configured to connect to a wireless router, to exchange information with the server through the wireless router. Alternatively, the communication assembly 280 is configured to directly exchange information with the server by using the mobile Internet.

Referring to FIG. 3, FIG. 3 is a block diagram of a structure of a smart device provided in an exemplary implementation of the disclosure. As illustrated in FIG. 3, the smart device includes a processor 320, a memory 340, an image acquisition assembly 360, and a communication assembly 380, where the memory 340 stores at least one instruction, and the instruction is loaded and executed by the processor 320 to implement the account binding method of each method implementation of the disclosure.

In the disclosure, the smart device 300 scans a target graphic code displayed on a control device, where the target graphic code includes a first string, and the first string and a master account logged in the control device have a mapping relationship; the smart device 300 parses the target graphic code to obtain a second string; and the smart device 300 sends the second string to a server, where the second string is for the server to verify validity of establishing a binding relationship between the smart device and the master account according to the mapping relationship.

The processor 320 may include one or more processing cores. The processor 320 is configured to connect to various parts in the whole smart device 300 by using various interfaces and lines, and executes various functions of the smart device 300 and processes data by running or executing an instruction, a program, a code set or an instruction set stored in the memory 340 and invoking data stored in the memory 340. Optionally, the processor 320 may be implemented in at least one hardware form of DSP, an FPGA, or a PLA. The processor 320 may integrate one or a combination of a CPU, a GPU, a modem, and the like. The CPU is mainly used to process an operating system, a user interface, an application program, and the like. The GPU is for rendering and drawing contents required to be displayed on a display screen. The modem is used to process wireless communication. It should be understood that, the modem may also not be integrated into the processor 320 and may be implemented by using one chip separately.

The memory 340 may include a RAM, and may also include a ROM. Alternatively, the memory 340 may include a non-transitory computer readable storage medium. The memory 340 may be used to store instructions, programs, code, code sets, or instruction sets. The memory 340 may include a program storage area and a data storage area, where the program storage area may store an instruction for implementing the operating system, an instruction for at least one function (such as a touch control function, a voice playing function, and an image playing function), an instruction for implementing each of the following method implementations, and the like. The data storage area may store data involved in the following method implementations.

The image acquisition assembly 360 is configured to capture an image including the target graphic code. In a possible implementation, the image acquisition assembly 360 may be a camera. The smart device 300 itself may be a device such as a camera, a smart doorbell, or an electronic cat eye. Alternatively, the smart device 300 may also be a smart television, a smart air conditioner, or a smart refrigerator, which may include a camera.

The communication assembly 380 may be configured to perform a communication connection with the wireless router, and further connect to the server through the wireless router. The smart device 300 connected to the server can exchange data with the server. In another possible implementation, the smart device 300 can be directly connected to other devices through the communication assembly 380. Exemplarily, communication protocols that can provide direct connection include a Bluetooth protocol, a WiFi (wireless fidelity) protocol, a ZigBee protocol, or a LiFi (light fidelity) protocol, which is not limited in the disclosure.

Referring to FIG. 4, FIG. 4 is a block diagram of a structure of a server provided in an exemplary implementation of the disclosure. As illustrated in FIG. 4, the server includes a processor 420, a memory 440, and a communication assembly 460. The memory 440 stores at least one instruction, and the instruction is loaded and executed by the processor 420 to implement the account binding method of each method implementation of the disclosure.

In the disclosure, the server 400 receives a request message sent by a control device, where the request message is for requesting a first string; the server 400 generates the first string according to a preset rule, and the first string and a master account logged in the control device have a mapping relationship; the server 400 sends the first string to the control device, so that the control device transfers the first string to a smart device in a preset manner, where the first string is for the server to verify validity of establishing a binding relationship between the smart device and the master account according to the mapping relationship.

The processor 420 may include one or more processing cores. The processor 420 is configured to connect to various parts in the whole server 400 by using various interfaces and lines, and executes various functions of the server 400 and processes data by running or executing an instruction, a program, a code set, or an instruction set stored in the memory 440 and invoking data stored in the memory 440. Optionally, the processor 420 may be implemented in at least one hardware form of DSP, an FPGA, or a PLA. The processor 420 may integrate one or a combination of a CPU, a GPU, a modem, and the like. The CPU is mainly used to process an operating system, a user interface, an application program, and the like. The GPU is for rendering and drawing contents required to be displayed on a display screen. The modem is used to process wireless communication. It should be understood that the modem may also not be integrated into the processor 420 and may be implemented by using one chip separately.

The memory 440 may include a RAM, and may also include a ROM. Alternatively, the memory 440 may include a non-transitory computer readable storage medium. The memory 440 may be used to store instructions, programs, code, code sets, or instruction sets. The memory 440 may include a program storage area and a data storage area, where the program storage area may store instructions for implementing the operating system, instructions for at least one function (such as a touch control function, a voice playing function, and an image playing function), instructions for implementing the following method implementations, and the like. The data storage area may store data involved in the following method implementations.

The communication assembly 460 may be configured to perform a communication connection with a wireless router, and further connect to the smart device through the wireless router. In another possible implementation, the server 400 may also be directly connected to other devices through the communication assembly 380. Exemplarily, communication protocols that can provide direct connection include a Bluetooth protocol, a WiFi protocol, a ZigBee protocol, or a LiFi protocol, etc., which is not limited in the disclosure.

In another possible implementation, the communication assembly 460 is further configured to perform a communication connection with the control device.

Referring to FIG. 5, FIG. 5 is a flowchart of an account binding method provided in an exemplary implementation of the disclosure. The account binding method is performed by the above control device. In FIG. 5, the account binding method includes the following.

510, a request message is sent to a server, where the request message is for requesting to obtain a first string.

In implementations of the disclosure, the control device may first log in to the server through a master account and a password.

Exemplarily, the server may be set according to a region served by the server. In a possible implementation, one country has one server. For example, server A serves country a, server B serves country b, and server C serves country c.

In another possible implementation, one region has one server, for example, in the territory of country A, an East China region server, a Northeast China region server, a North China region server, a Northwest region server, a Central China region server, a South China region server, a South West region server, and a Focus Marine region server are included.

In a possible login manner, the control device can autonomously select a server of a region that needs to be logged in before logging in to the server. For example, the control device currently located in the South China region autonomously selects to log in to the East China region server.

In another possible login manner, the control device does not need to select a server to be logged in. After receiving a login request sent by any main control device in the control device, a server to which the main control device belongs is queried, and the login request is forwarded to the server to which the main control device belongs. Exemplarily, the server to which the main control device belongs is a server where the master account is registered.

In another possible login manner, the control device does not need to select a server to be logged in. The control device sends a login request of the master account to a server corresponding to a current location of the control device.

After verification of the master account and password passes, the server may establish trusted encrypted communication with the control device. Exemplarily, the server may establish transport layer security (TLS) based communication with the control device.

Optionally, after the trusted encrypted communication is established between the server and the control device, for the communication between the server and the control device, there is no need to transmit identifiers thereof again and the identity may be recognized through the token. For example, information A transmitted by the control device to the server does not need to carry the identifier of the control device, and the server can recognize, by using the token, that information A is sent by the control device.

In this example, the control device can send the request message to the server. It should be noted that, in this step, the control device requests the first string from the server, so that the master account is replaced with the first string, thereby avoiding the potential problem of leakage of the master account during the transmission.

520, the first string is received from the server.

In this example, the control device receives the first string sent by the server, where the first string has a mapping relationship with the master account logged in the control device. The server determines the first string according to the request message and sends the first string to the control device.

Accordingly, the server sends the first string to the control device.

530, a target graphic code is generated according to the first string.

In the implementation of the disclosure, the control device can determine a preset encoding rule. It should be noted that, the preset encoding rule is a rule preset in the control device.

In a possible implementation, the control terminal implements, with a designated application (App), the account binding method executed by the control terminal provided in the implementation of the disclosure. The corresponding processing logic can be used as logic that is set in the application, and when the application runs, the method executed by the control terminal is automatically executed.

Optionally, the application may be a system application built in an operating system, and may also be a third-party application provided by a service provider.

In this example, the preset encoding rule may be an integrated rule of fields and codes and includes the base62 rule.

In the implementation of the disclosure, the control device may further acquire network access information, where the network access information is for accessing a designated wireless router. Because the network access information is an identifier and an access password of the designated wireless router, the network access information is used to access the designated wireless router.

After acquiring the network access information, the control device encodes the first string and the network access information according to the preset encoding rule, and performs two-dimensional coding on the encoded string to obtain the target graphic code.

It should be noted that the network access information may be networking parameter information, and if a communication network in use is a WiFi network, the network access information may be an SSID and a corresponding PSK. It should be noted that, this information in the control terminal may be input manually by the user, or may also be extracted by the control terminal from the saved information.

In a practical application scenario, the control terminal needs to encode the first string and the network access information according to the preset encoding rule, and reference may be made to the following process. In this example, the first string is represented by BindKey, and the network access information includes ssid and PSK. The encoding rule is "S<base62(ssid)> P<base62(PSK XOR ssid )> B<base62(BindKey)>", where S, P, and B are keywords. S represents ssid of WiFi, P represents PSK of WiFi, and B represents the first string BindKey.

For example, an exclusive OR operation is performed on PSK and ssid in the above P field, which aims to protect PSK, to prevent PSK from being directly obtained by simply parsing a two-dimensional code after any device scans the two-dimensional code. It should be noted that, the exclusive OR operation may also be performed on PSK and other fields, for example, the exclusive OR operation may be performed on PSK and BindKey. In addition to the exclusive OR operation, the control device may also use other operations to protect PSK. After the first string is processed according to the preset encoding rule, the first string may be two-dimensionally converted into a two-dimensional code.

In another practical application scenario, the control terminal needs to encode a current system time, the first string, and the network access information according to the preset encoding rule, and then perform two-dimensional coding on the encoded string to obtain the target graphic code.

Exemplarily, the encoding rule is "T<base62(time)>S<base62(ssid)>P<base62(PSK XOR ssid )>B<base62(BindKey)>". The keyword T represents a system time when the control terminal generates the graphic code. The keyword T may also be replaced by a keyword D, where the keyword D also indicates the system time when the graphic code is generated.

That is, the encoding rule may also be "D<base62(time)>S<base62(ssid)>P<base62(PSK XOR ssid)>B<base62(BindKey)>".

In another practical application scenario, the control terminal needs to encode the current system time, the identifier of the server, the first string, and the network access information according to the preset encoding rule. Exemplarily, the encoding rule is D<base62(time)>R<base62(region)>S<base62(ssid)>P<base62(PSK XOR ssid)>B<base62(BindKey). The keyword R represents the identifier of the server, and R may specifically represent the region where the server is located.

540, the target graphic code is displayed, so that the smart device scans and parses the target graphic code to obtain a second string, where the second string is for the server to verify, according to the mapping relationship, validity of establishing a binding relationship between the smart device and the master account.

In the implementation of the disclosure, after generating the target graphic code, the control device can display the target graphic code through a display assembly. In one possible implementation, the terminal directly displays the target graphic code on a screen. In another possible implementation, when being equipped with a projecting assembly, the terminal can also display the target graphic code through the projecting assembly.

Optionally, a base64 rule is used to avoid that several strings cannot be correctly encoded. After the control terminal uses the preset encoding rule, the first string and the network access information may be encoded into the target graphic code. The network access information is used to establish a communication connection with a wireless router. In an implementation, according to an encoding rule of representing binary data based on 64 printable characters (base64), the control device generates the first string and the network access information that are encoded according to the preset encoding rule as the target graphic code.

It should be noted that the second string is obtained after the smart device scans the target graphic code, and the second string can be used together with the mapping relationship to verify the validity of establishing the binding relationship between the smart device and the master account.

Accordingly, after acquiring the target graphic code, the smart device can parse the information therein to obtain the second string, and the validity of binding the smart device and the master account logged in the control device can be verified through the second string.

In conclusion, in the account binding method provided in the implementation, the control terminal can send the request to the server, acquire the first string sent by the server, generate the target graphic code according to the first string, and finally display the target graphic code on the screen. Since the control terminal can replace the master account logged in the control terminal with the first string, and display same in the form of the graphic code, such that the smart device can parse the target graphic code to obtain the corresponding second string, and finally complete the binding between the smart device and the control device when the server determines that the verification passes. On this basis, the control terminal provided in the disclosure can improve efficiency of binding the smart device and the master account while protecting security of the master account logged in the control device.

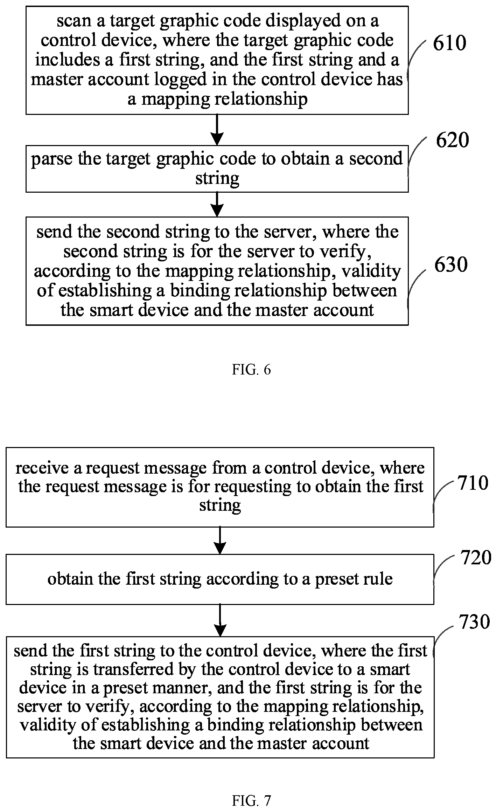

Referring to FIG. 6, FIG. 6 is a flowchart of an account binding method provided in an exemplary implementation of the disclosure. The account binding method is performed by the above smart device. In FIG. 6, the account binding method includes the following.

610, a target graphic code displayed on a control device is scanned, where the target graphic code includes a first string, and the first string and a master account logged in the control device has a mapping relationship.

In the implementation of the disclosure, the smart device can capture the target graphic code displayed on the control device. It should be noted that the smart device may be in a network configuration state before the smart device accesses the Internet. In the network configuration state, the smart device may recognize each collected image at a target period, and if an image containing the target graphic code is recognized, the image may be extracted.

620, the target graphic code is parsed to obtain a second string.

Optionally, the smart device extracts the second string from the target graphic code according to a preset parsing rule in the device. It should be noted that, the smart device can parse, with the preset parsing rule, a field of the first string that is encoded with the preset encoding rule to obtain the second string.

Optionally, the smart device can parse the encoded network access information to obtain the network access information.

Exemplarily, when the smart device is a device processed according to a preset protocol, the preset parsing rule is set therein and the preset parsing rule corresponds to the preset encoding rule. In a possible implementation, the original target string "abcde" is obtained after the target string "abcde" is encoded with the preset encoding rule and then parsed with the preset parsing rule.

Optionally, the smart device can further parse the target graphic code to obtain the network access information, and establish a communication connection with the wireless router according to the network access information.

In this example, the smart device may establish the communication connection with the wireless router by executing (1), (2), and (3).
(1), the network access information is parsed to obtain an identifier and a key of a wireless router.
(2), the network access information is parsed to obtain an address acquisition manner of the wireless router.
(3), the communication connection with the wireless router is established according to the identifier and the key of the wireless router, and an Internet protocol address is acquired according to the address acquisition manner.

In the process of (3), the Internet protocol (IP) address is determined according to the specific type of the address acquisition manner.

In a possible implementation, when the address acquisition manner is static acquisition, the smart device may obtain a designated static IP address provided by the wireless router. In this manner, the smart device will receive the static IP address assigned by the wireless router.

In another possible implementation, when the address acquisition manner is dynamic allocation, the smart device may obtain the IP address according to a dynamic acquisition rule. The dynamic acquisition rule may be DHCP.

630, the second string is sent to the server, where the second string is for the server to verify, according to the mapping relationship, validity of establishing a binding relationship between the smart device and the master account.

In conclusion, in the account binding method provided in the disclosure, the smart device can parse to obtain the second string by scanning the target graphic code displayed on the control terminal, and send the second string to the server. When, in the server, there is a first string completely identical to the second string, the server binds the smart device and the master account. Since the smart device can obtain the second string which does not include the master account from the graphic code provided by the control device and bind with the master account through the second string, binding of the smart device and the master account can be simplified and meanwhile the security of the master account can be improved.

Referring to FIG. 7, FIG. 7 is a flowchart of an account binding method provided in an exemplary implementation of the disclosure. The account binding method is performed by the above server. In FIG. 7, the account binding method includes the following.

710, a request message is received from a control device, where the request message is for requesting to obtain the first string.

In the implementation of the disclosure, the server can receive the request message sent by the control device. It should be noted that, the control terminal may establish encrypted communication with the server in advance, and the server can directly determine that the request is sent by the control device when obtaining the request message.

In another possible implementation, the server may not establish encrypted communication with the control device in advance. In this implementation, the control device sends the request message along with the master account that is logged in the control device to the server.

720, the first string is obtained according to a preset rule.

In this example, the server can obtain the first string according to the preset rule. It should be noted that the server can not only generate the first string, but also select a string from a preset sequence library which has stored several strings. The first string and the master account logged in the control device have a mapping relationship.

Optionally, the mapping relationship is established actively by the server.

In the implementations of the disclosure, the server can establish and maintain the mapping relationship between the first string and the master account logged in the control device. Exemplarily, the mapping relationship may be saved through a mapping table.

730, the first string is sent to the control device, where the first string is transferred by the control device to a smart device in a preset manner, and the first string is for the server to verify, according to the mapping relationship, validity of establishing a binding relationship between the smart device and the master account.

In this example, the server can send the first string to the control device, where the first string is for the control device to generate a target graphic code. After the target graphic code is read by the smart device, corresponding information is sent to the server. When the server verifies according to this information that binding of the smart device and the master account is secure, the server will bind the smart device with the master account.

In the implementations of the disclosure, the server can generate and maintain the mapping relationship between the master account and the first string, so that when the master account logged in the control device is bound with the smart device, the control device does not need to provide the master account, thereby ensuring the security of the master account. In the case where the first string is leaked accidentally, there is no need to worry about leakage of the master account. This is because the master account and the first string are in the mapping relationship, and when the mapping relationship in the server is secure and is not leaked, the security of the master account can be effectively ensured.

The following introduces the account binding method illustrated in the implementation of the disclosure by using an example in which a server, a control device, and a smart device participate.

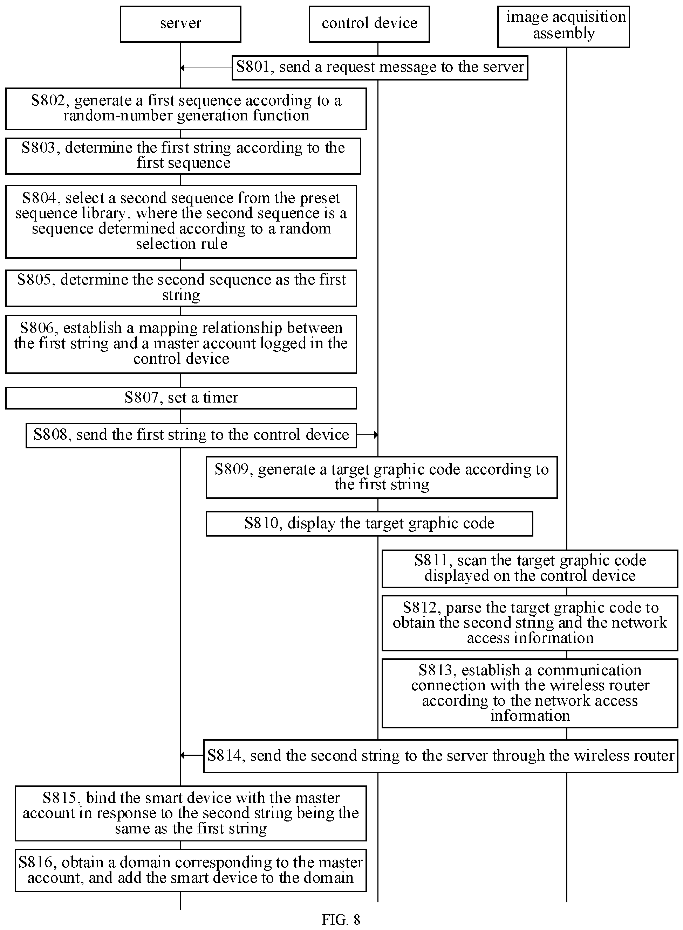

Referring to FIG. 8, FIG. 8 is a flowchart of an account binding method provided in another exemplary implementation of the disclosure. The account binding method may be implemented through cooperation of a control device, a server, and a smart device. In FIG. 8, the account binding method includes the following.

S801, the control device sends a request message to the server.

The request message is used for requesting to obtain a first string.

Accordingly, the server receives the request message sent by the control device.

S802, the server generates a first sequence according to a random-number generation function.

In a possible implementation, the server invokes a random number generation interface to generate the first sequence, where the first sequence is a random sequence.

In another possible implementation, the server directly executes the random-number generation function, to generate the first sequence.

S803, the server determines the first string according to the first sequence.

In the implementations of the disclosure, the server can determine the first string in various manners. The following describes four first-string determination methods.

### (1) Determination through modulus-based supplement

1. The server obtains an initial character in the first sequence.
2. The server obtains a result *m* by performing a modulo operation on the initial character by *n,* where *n and m* are positive integers.
3. The server obtains the first string by adding *m* to an end of the first sequence.

In the determination through modulus-based supplement, the server can digitize the initial character. For example, the server can digitize the initial character according to hexadecimal, and obtain the number *m* by performing the modulo operation on the initial character by *n.* By adding *m* to the end of the first sequence, the length of the first sequence is changed, thereby increasing the difficulty in obtaining the first sequence by a malicious information interceptor.

### (2) Determination through number supplement

1. The server obtains the initial character in the first sequence.
2. The server obtains the result *m* by performing a modulo operation on the initial character by *n,* where *n and m* are positive integers.
3. The server obtains the first string by adding same preset characters *of m* bits to the end of the first sequence.

Similar to the determination through modulus-based supplement, the server can also add the same preset characters of *m* bits to the end of the first sequence to obtain the first string, thereby changing the length of the first sequence.

### (3) Determination through string supplement

1. The server obtains the initial character in the first sequence.
2. The server obtains the result *m* by performing a modulo operation on the initial character by *n,* where *n and m* are positive integers.
3. The server determines a check code *k* corresponding to *m* according to a preset mapping relationship, where k is a character or a string.
4. The server obtains the first string by adding k to the end of the first sequence.

In the determination through string supplement, the server maintains a mapping relationship between *m* and a corresponding check code *k* in advance. The server adds *k* to the end of the first sequence, to change the length of the first sequence, thereby increasing the difficulty in obtaining the first sequence by a malicious information interceptor.

### (4) Direct determination: the server determines the first sequence as the first string.

S804, a second sequence is selected from the preset sequence library, where the second sequence is a sequence determined according to a random selection rule.

S805, the second sequence is determined as the first string.

S806, the server establishes a mapping relationship between the first string and a master account logged in the control device.

S807, a timer is set.

In this example, before expiry of the timer, the mapping relationship between the master account and the first string is maintained.

In this example, in response to expiry of the timer, the mapping relationship between the master account and the first string is released.

S808, the server sends the first string to the control device.

In this example, the server sends the first string to the control device, so that the control device transfers the first string to the smart device in the preset manner, where the first string is used for the server to verify, according to the mapping relationship, validity of establishing a binding relationship between the smart device and the master account.

Accordingly, the control device receives the first string sent by the server.

S809, the control device generates a target graphic code according to the first string.

In the implementation of the disclosure, the control device can further encode network access information into the target graphic code. The network access information is used for accessing a designated wireless router.

S810, the control device displays the target graphic code.

The control device displays the target graphic code, so that the designated smart device is bound with the master account that is logged in the control device according to the information of the target graphic code.

S811, the smart device scans the target graphic code displayed on the control device.

In S811, the smart device scans and parses the target graphic code and then obtains the second string, where the second string is used for the server to verify, according to the mapping relationship, the validity of establishing the binding relationship between the smart device and the master account.

S812, the smart device parses the target graphic code to obtain the second string and the network access information.

S813, the smart device establishes a communication connection with the wireless router according to the network access information.

S814, the smart device sends the second string to the server through the wireless router.

Accordingly, the server receives the second string sent by the smart device.

S815, the server binds the smart device with the master account in response to the second string being the same as the first string.

S816, the server obtains a domain corresponding to the master account, and adds the smart device to the domain.

Exemplarily, the master account may correspond to only one domain. For example, the master account Jack corresponds to only one domain of Jack's home. In this case, the server adds the smart device to the domain.

Alternatively, when the master account corresponds to at least two domains, for example, the master account Brown corresponds to two domains: Brown's home and Brown' office. When determining the domain corresponding to the master account, the server may determine the corresponding domain according to the geographic position where the control device is located. For example, if the geographic position where the control device sends the request message is an ABC office building, the server can determine, according to pre-stored geographic positions of the domains, that the domain corresponding to the geographic position is Brown's office, and then the server adds the smart device to the domain.

In the disclosure, if the timer in the server expires, the mapping relationship between the master account and the first string is released. It should be noted that, the timer is automatically set when the server determines the first string. The duration of the timer may be set to be 5 minutes, 10 minutes, or 15 minutes, which is not limited in implementations of the disclosure.

In implementations of the disclosure, when the control device requests to obtain the first string, the server can maintain the mapping relationship between the master account and the first string in the server, and send the first string to the control device. The control device generates the corresponding graphic code through the preset encoding rule, according to the first string and the network access information. The smart device scans the graphic code, parses the graphic code to obtain the second string and the network access information, accesses the wireless router according to the network access information, and sends the second string to the server via the wireless router. In the case that the second string and the first string are the same, the server establishes the connection between the smart device and the master account. Since the smart device can directly connect to the Internet after scanning the graphic code, and bind with the master account in the server, networking and binding of the smart device can be simplified, security of the master account can be improved, and leakage of the master account can be avoided.

The following describes device implementations of the disclosure, which may be used to execute the method implementations of the disclosure. For details not disclosed in the device implementations of the disclosure, refer to the method implementations of the disclosure.

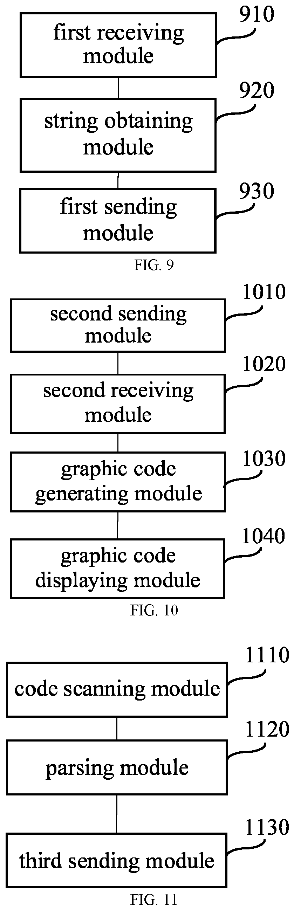

FIG. 9 is a block diagram of a structure of an account binding apparatus provided in an exemplary implementation of the disclosure. The account binding apparatus can be implemented as all or part of a server through software and hardware or a combination thereof. The apparatus includes a first receiving module 910, a string obtaining module 920, and a first sending module 930.

The first receiving module 910 is configured to receive a request message from a control device, where the request message is for requesting a first string. The string obtaining module 920 is configured to generate the first string according to a preset rule, where the first string and a master account logged in the control device have a mapping relationship. The first sending module 930 is configured to send the first string to the control device, where the first string is transferred by the control device to a smart device in a preset manner, and the first string is for the server to verify, according to the mapping relationship, validity of establishing a binding relationship between the smart device and the master account.

In an optional implementation, the apparatus further includes an execution module. The execution module is configured to: receive a second string from the smart device, and establish the binding relationship between the smart device and the master account in response to the second string matching the first string.

In an optional implementation, the apparatus further includes a timing module. The timing module is configured to set a timer, and release the mapping relationship between the master account and the first string in response to expiry of the timer.

In an optional implementation, the string obtaining module 920 is configured to: generate a first sequence according to a random-number generation function, where the first sequence is a random sequence, and determine the first string according to the first sequence.

In an optional implementation, the string obtaining module 920 is configured to: obtain an initial character in the first sequence, obtain a result *m* by performing a modulo operation on the initial character by *n,* where *n and m* are positive integers, and obtain the first string by adding *m* to the end of the first sequence.

In an optional implementation, the string obtaining module 920 is configured to: obtain the initial character in the first sequence, obtain the result *m* by performing the modulo operation on the initial character by *n,* where *n and m* are positive integers, and obtain the first string by adding same preset characters *of m* bits to the end of the first sequence.

In an optional implementation, the string obtaining module 920 is configured to: obtain the initial character in the first sequence, obtain the result *m* by performing the modulo operation on the initial character by *n,* where *n and m* are positive integers, determine a check code *k* corresponding to *m* according to a preset mapping relationship, where k is a character or a string, and obtain the first string by adding k to the end of the first sequence.

In an optional implementation, the string obtaining module 920 is configured to: determine the first sequence as the first string.

In an optional implementation, the string obtaining module 920 is configured to: select a second sequence from a preset sequence library, where the second sequence is determined according to a random selection rule, and determine the second sequence as the first string.

In an optional implementation, the apparatus further includes a binding module. The binding module is further configured to obtain a domain corresponding to the master account and add the smart device to the domain.

In an optional implementation, the master account corresponds to at least two domains and the binding module is configured to: obtain a geographic position where the control device sends the request message, and determine a domain corresponding to the geographic position from the at least two domains.

In conclusion, in the account binding apparatus provided in the implementation, the server can generate and maintain the mapping relationship between the master account and the first string, so that when the master account logged in the control device is bound with the smart device, the control device does not need to provide the master account, thereby ensuring the security of the master account. In the case where the first string is leaked accidentally, there is no need to worry about leakage of the master account. This is because the master account and the first string are in the mapping relationship, and when the mapping relationship in the server is secure and is not leaked, the security of the master account can be effectively ensured.

FIG. 10 is a block diagram of a structure of an account binding apparatus provided in an exemplary implementation of the disclosure. The account binding apparatus can be implemented as all or part of a control device through software and hardware or a combination thereof. The apparatus includes a second sending module 1010, a second receiving module 1020, a graphic code generating module 1030, and a graphic code displaying module 1040.

The second sending module 1010 is configured to send a request message to a server, where the request message is for requesting a first string. The second receiving module 1020 is configured to receive the first string from the server, where the first string and a master account logged in the control device have a mapping relationship. The graphic code generating module 1030 is configured to generate a target graphic code according to the first string. The graphic code displaying module 1040 configured to display the target graphic code, where the target graphic code is to be scanned and parsed by the smart device to obtain a second string, and the second string is for the server to verify, according to the mapping relationship, validity of establishing a binding relationship between the smart device and the master account.

In an optional implementation, the graphic code generating module 1030 is configured to: obtain network access information, where the network access information is for accessing a designated wireless router, and encode the first string and the network access information according to a preset encoding rule and generate the target graphic code.

In an optional implementation, the graphic code generating module 1030 is configured to: generate the first string and the network access information that are encoded according to the preset encoding rule as the target graphic code, according to an encoding rule of representing binary data based on 64 printable characters.

In the account binding apparatus provided in the implementation, the control terminal can send the request to the server, acquire the first string sent by the server, generate the target graphic code according to the first string, and finally display the target graphic code on the screen. Since the control terminal can replace the master account logged in the control terminal with the first string, and display same in the form of the graphic code, such that the smart device can parse the target graphic code to obtain the corresponding second string, and finally complete the binding between the smart device and the control device when the server determines that the verification passes. On this basis, the control terminal provided in the disclosure can improve efficiency of binding the smart device and the master account while protecting security of the master account logged in the control device.

FIG. 11 is a block diagram of a structure of an account binding apparatus provided in an exemplary implementation of the disclosure. The account binding apparatus can be implemented as all or part of a smart device through software and hardware or a combination thereof. The apparatus includes a code scanning module 1110, a parsing module 1120, and a third sending module 1130.

The code scanning module 1110 is configured to scan a target graphic code displayed on a control device, where the target graphic code includes a first string, and the first string and a master account logged in the control device have a mapping relationship. The parsing module 1120 is configured to parse the target graphic code to obtain a second string. The third sending module 1130 is configured to send the second string to a server, where the second string is for the server to verify, according to the mapping relationship, validity of establishing a binding relationship between the smart device and the master account.

Optionally, the apparatus further includes a networking module, configured to parse the target graphic code to obtain network access information, where the target graphic code includes the network access information, and the network access information is for accessing a designated wireless router.

In conclusion, in the account binding apparatus provided in the implementation, the smart device can parse to obtain the second string by scanning the target graphic code displayed on the control terminal, and send the second string to the server. When, in the server, there is a first string completely identical to the second string, the server binds the smart device and the master account. Since the smart device can obtain the second string which does not include the master account from the graphic code provided by the control device and bind with the master account through the second string, binding of the smart device and the master account can be simplified and meanwhile the security of the master account can be improved.

Implementations of the disclosure further provide a computer-readable storage medium. The computer-readable storage medium stores at least one instruction, which when loaded and executed by a processor, implements the account binding method of each implementation.

It should be noted that, for the account binding apparatus of the foregoing implementations for performing the account binding method, the division of the foregoing functional modules is merely used for illustration. In practice, the above functions can be allocated to different functional modules as required, that is, the internal structure of the device can be divided into different functional modules to complete all or part of the functions described above. In addition, the device implementations and the method implementations of the above belong to the same concept, and the implementation process of the device implementations is detailed in the method implementations, which will not be repeated herein.

The above serial numbers of the implementations are merely for description and do not represent advantages and disadvantages of the implementations.

Those of ordinary skill in the art can understand that all or part of the operations in the foregoing implementations can be achieved by hardware or by a program instructing related hardware. The program can be stored in a computer-readable storage medium. The storage medium may be a read-only memory, a magnetic disk, or an optical disk, etc.

The above is merely exemplary implementations that can be implemented by the disclosure and is not intended to limit the disclosure. Any modification, equivalent substitute, improvement, and the like, made within the spirit and principle of the disclosure shall be included in the protection scope of the disclosure.

## Claims

1. An account binding method, performed by a server and comprising:
receiving a request message from a control device, the request message being for requesting a first string;
generating the first string according to a preset rule, the first string and a master account logged in the control device having a mapping relationship; and
sending the first string to the control device, the first string being transferred by the control device to a smart device in a preset manner, and the first string being for the server to verify, according to the mapping relationship, validity of establishing a binding relationship between the smart device and the master account.

2. The method of claim 1, further comprising:
receiving a second string from the smart device; and
establishing the binding relationship between the smart device and the master account in response to the second string matching the first string.

3. The method of claim 1, after generating the first string according to the preset rule, further comprising:
setting a timer; and
releasing the mapping relationship between the master account and the first string in response to expiry of the timer.

4. The method of claim 1, wherein generating the first string according to the preset rule comprises:
generating a first sequence according to a random-number generation function, wherein the first sequence is a random sequence; and
determining the first string according to the first sequence.

5. The method of claim 4, wherein determining the first string according to the first sequence comprises:
obtaining an initial character in the first sequence;
obtaining a result *m* by performing a modulo operation on the initial character by *n,* wherein *n and m* are positive integers; and
obtaining the first string by adding *m* to the end of the first sequence; or
obtaining the initial character in the first sequence;
obtaining the result *m* by performing the modulo operation on the initial character by *n,* wherein *n and m* are positive integers; and
obtaining the first string by adding same preset characters *of m* bits to the end of the first sequence; or
obtaining the initial character in the first sequence;
obtaining the result *m* by performing the modulo operation on the initial character by *n,* wherein *n and m* are positive integers;
determining a check code *k* corresponding to *m* according to a preset mapping relationship, wherein k is a character or a string; and
obtaining the first string by adding k to the end of the first sequence; or
determining the first sequence as the first string.

6. The method of claim 3, wherein generating the first string according to the preset rule comprises:
selecting a second sequence from a preset sequence library, wherein the second sequence is determined according to a random selection rule; and
determining the second sequence as the first string.

7. The method of claim 2, after establishing the binding relationship between the smart device and the master account, further comprising:
obtaining a domain corresponding to the master account and adding the smart device to the domain.

8. The method of claim 7, wherein the master account corresponds to at least two domains and obtaining the domain corresponding to the master account comprises:
obtaining a geographic position where the control device sends the request message; and
determining a domain corresponding to the geographic position from the at least two domains.

9. An account binding method, performed by a control device and comprising:
sending a request message to a server, the request message being for requesting a first string;
receiving the first string from the server, the first string and a master account logged in the control device having a mapping relationship;
generating a target graphic code according to the first string; and
displaying the target graphic code, the target graphic code being to be scanned and parsed by the smart device to obtain a second string, and the second string being for the server to verify, according to the mapping relationship, validity of establishing a binding relationship between the smart device and the master account.

10. The method of claim 9, wherein generating the target graphic code according to the first string comprises:
obtaining network access information, wherein the network access information is for accessing a designated wireless router; and
encoding the first string and the network access information according to a preset encoding rule, and generating the target graphic code.

11. The method of claim 10, wherein generating the target graphic code comprises:
generating the first string and the network access information that are encoded according to the preset encoding rule as the target graphic code, according to an encoding rule of representing binary data based on 64 printable characters.

12. An account binding method, performed by a smart device having an image acquisition assembly, the method comprising:
scanning a target graphic code displayed on a control device, the target graphic code comprising a first string, and the first string and a master account logged in the control device having a mapping relationship;
parsing the target graphic code to obtain a second string; and
sending the second string to a server, the second string being for the server to verify, according to the mapping relationship, validity of establishing a binding relationship between the smart device and the master account.

13. The method of claim 12, wherein
the target graphic code comprises network access information, and the network access information is for accessing a designated wireless router; and
before sending the second string to the server, the method further comprises:
parsing the target graphic code to obtain the network access information; and
accessing the wireless router according to the network access information.

14. An account binding apparatus, performed by a server and comprising:
a first receiving module configured to receive a request message from a control device, the request message being for requesting a first string;
a string obtaining module configured to generate the first string according to a preset rule, the first string and a master account logged in the control device having a mapping relationship; and
a first sending module configured to send the first string to the control device, the first string being transferred by the control device to a smart device in a preset manner, and the first string being for the server to verify, according to the mapping relationship, validity of establishing a binding relationship between the smart device and the master account.

15. An account binding apparatus, performed by a control device and comprising:
a second sending module configured to send a request message to a server, the request message being for requesting a first string;
a second receiving module configured to receive the first string from the server, the first string and a master account logged in the control device having a mapping relationship;
a graphic code generating module configured to generate a target graphic code according to the first string; and
a graphic code displaying module configured to display the target graphic code, the target graphic code being to be scanned and parsed by the smart device to obtain a second string, and the second string being for the server to verify, according to the mapping relationship, validity of establishing a binding relationship between the smart device and the master account.

16. An account binding apparatus, performed by a smart device having an image acquisition assembly, the apparatus comprising:
a code scanning module configured to scan a target graphic code displayed on a control device, the target graphic code comprising a first string, and the first string and a master account logged in the control device having a mapping relationship;
a parsing module configured to parse the target graphic code to obtain a second string; and
a third sending module configured to send the second string to a server, the second string being for the server to verify, according to the mapping relationship, validity of establishing a binding relationship between the smart device and the master account.

17. A server, comprising a memory storing program instructions and a processor coupled with the memory and configured to execute the program instructions to implement the account binding method of any of claims 1 to 7.

18. A control device, comprising a memory storing program instructions and a processor coupled with the memory and configured to execute the program instructions to implement the account binding method of claim 8 or 9.

19. A smart device, comprising a memory storing program instructions and a processor coupled with the memory and configured to execute the program instructions to implement the account binding method of any of claims 10 to 12.

20. A computer-readable storage medium storing program instructions, which when executed by a processor, cause the processor to execute the account binding method of any of claims 1 to 7.

21. A computer-readable storage medium storing program instructions, which when executed by a processor, cause the processor to execute the account binding method of claim 8 or 9.

22. A computer-readable storage medium storing program instructions, which when executed by a processor, cause the processor to execute the account binding method of any of claims 10 to 12.
